Europäisches Patentamt

European Patent Office

Office européen des brevets

(11) Veröffentlichungsnummer: **0 321 437**
**A2**

(12) # EUROPÄISCHE PATENTANMELDUNG

(21) Anmeldenummer: **88890286.3**

(22) Anmeldetag: **14.11.88**

(51) Int. Cl.⁴: **B 26 F 1/46**
**B 21 D 37/20**

(30) Priorität: **18.12.87 AT 3354/87**

(43) Veröffentlichungstag der Anmeldung:
**21.06.89 Patentblatt 89/25**

(84) Benannte Vertragsstaaten:
**AT BE CH DE ES FR GB GR IT LI LU NL SE**

(71) Anmelder: **SKOMAB INTERNATIONAL MASCHINEN UND STAHL-HANDELSGESELLSCHAFT M.B.H.**
**Zetschegasse 1**
**A-1232 Wien (AT)**

(72) Erfinder: **Böswarth, Leopold**
**Rugierstrasse 26/14**
**A-1220 Wien (AT)**

(74) Vertreter: **Barger, Erich et al**
**Patentanwälte Dipl.-Ing. Erich Barger Dipl.-Ing. Hermann Krick Biberstrasse 15**
**A-1010 Wien (AT)**

(54) **Verfahren zur Herstellung eines ein-oder zweiseitigen Stanzmessers für nichtmetallische Werkstoffe.**

(57) Die Erfindung betrifft ein Verfahren zur Herstellung eines ein- oder zweiseitigen Stanzmessers (1) für nichtmetallische Werkstoffe, wie Leder, Textilien, Papier etc. mit einer innenliegenden Nut (4) und einer in die Nut eingreifenden Verstärkungsplatte (3).

Erfindungsgemäß ist dabei vorgesehen, daß die Verstärkungsplatte (3) aus nichtmetallischem Werkstoff besteht und von dem Messer (1), das sie verstärken soll, ausgestanzt wird.

FIG.2

EP 0 321 437 A2

**Beschreibung**

Die Erfindung betrifft ein Verfahren zur Herstellung eines ein- oder zweiseitigen Stanzmessers für nichtmetallische Werkstoffe, wie Leder, Textilien, Papier etc. mit einer innenliegenden Nut und einer in die Nut eingreifenden Verstärkungsplatte, sowie einen Bandstahl zur Durchführung des Verfahrens.

Aus der DE-OS 1 511 073 und der US-PS 2 298 041 sind Stanzmesser der herzustellenden Art bekannt. Sie werden beispielsweise aus Bandstahl, gegebenenfalls um die fertige Verstärkungsplatte herum, gebogen. Die Verstärkungsplatten aus Holz, Karton, Kunststoff oder Metall werden auf passende Weise, beispielsweise durch Sägen hergestellt, sodann in das Messer eingesetzt - oder das Messer wird um sie gebogen - und mit ihm verbunden.

Bei den Stanzmessern gemäß dem Stand der Technik ist es notwendig, die einzelnen Verstärkungsplatten für einzelne Konfektionsgrößen von Leder- oder Textilteilen aufwendig Stück für Stück herzustellen und mit den Stanzmessern zu verbinden.

Es sind auch Stanzmesser bekannt, die über keine Verstärkungsplatten verfügen, sondern stabförmige Versteifungselemente im Inneren des Messers aufweisen. Dabei ist die Anbringung der Verstärkungsstäbe, meist durch verschweißen, mindestens ebenso aufwendig und zeitraubend wie das Einfügen einer Verstärkungsplatte. Letztere hat dabei den Vorteil, das Stanzmesser gleichmäßig über den gesamten Umfang zu versteifen und zu unterstützen.

Der Zusammenbau der bisher verwendeten Messer ist, wie aus dem gesagten hervorgeht, zeitraubend und kostspielig.

Die Erfindung hat es sich zur Aufgabe gemacht, für ein Stanzmesser der eingangs erwähnten Art ein Herstellungsverfahren anzugeben, das einfach und kostengünstig durchzuführen ist. Es soll dabei weiters möglich sein, verschiedene Einbauten, wie Lochpfeifen, Innenmesser, Nahtvorzeichenlinien und Markierdorne ohne großen Arbeitsaufwand in der Verstärkungsplatte einfach und dauerhaft anzuordnen.

Diese Ziele werden erfindungsgemäß durch ein Herstellungsverfahren erreicht, bei dem die Verstärkungsplatte aus nichtmetallischem Werkstoff, vorzugsweise Kunststoff, besteht, wobei ihre Dicke zumindest annähernd der Breite der Nut entspricht, und bei dem sie von dem Messer, das sie verstärken soll, ausgestanzt wird.

Es ist auf diese Weise möglich, mit dem in Form gebrachten Messer eine passende Verstärkungsplatte aus einem größeren Stück auszustanzen und in einem Arbeitsgang gleich in die Nut des Messers einzupressen. Es wurde bisher nicht für möglich gehalten, daß das noch nicht versteifte Messer in der Lage wäre, diesen Stanzvorgang durchzuführen.

In einer Ausgestaltung werden, wie an sich bekannt, die Enden des Messers miteinander verbunden (verschweißt) und das Messer wird mit der Verstärkungsplatte, beispielsweise durch Schrauben, Löten oder Schweißen, verbunden. Damit wird eine besonders stabile und auch härtesten Beanspruchungen gerechte Messerkonstruktion erreicht, wobei durch die bereits erfolgte Einbringung der Platte in die Nut das darauffolgende Verbinden einfacher als bisher üblich ist.

In einer besonders vorteilhaften Ausgestaltung des erfindungsgemäßen Verfahrens werden in die Verstärkungsplatte, vorteilhafterweise nach deren Einpressen in das Messer, übliche Einbauten, wie Lochpfeifen, Innenmesser, Nahtvorzeichenlinien und Markierdorne, gegebenenfalls nach Vorbohren, eingestanzt. Es ist ein unvorhersehbarer Vorteil des erfindungsgemäß erhaltenen Stanzmessers, daß die Anbringung solcher Einbauten leicht und kostengünstig durch ein Stanzverfahren möglich ist. Dabei macht man sich bei Einbauten mit Schneidkanten die erfindungsgemäße Idee des Einstanzens zu Nutze, während für Einbauten ohne Schneidkanten im allgemeinen ein Vorbohren der Verstärkungsplatte notwendig ist. Es werden Einbauten verwendet, die an der der Verstärkungsplatte zugewandten Seite eine Nut aufweisen, die vorteilhafterweise der Nut des Messers entspricht.

Detailliert wird das erfindungsgemäße Verfahren zur Herstellung eines Stanzmessers so durchgeführt, daß das fertig gebogene und gegebenenfalls an seinen Enden geschlossene Messer auf eine feste Unterlage gelegt wird, daß eine Platte aus dem Material, aus dem die Verstärkungsplatte hergestellt werden soll oberhalb des Messers angeordnet und mittels in der Stanztechnik üblicher Vorrichtungen in das Messer eingestanzt wird, wobei die Verstärkungsplatte in die Nut zu liegen kommt.

Es ist auch möglich, das Messer auf die Platte zu legen oder am oberen Teil der Presse zu befestigen und den Stanzvorgang anschließend vorzunehmen.

Bei diesem Stanzvorgang ist es auch möglich, Innenmesser miteinzustanzen, wenn es die Form und die Größenverhältnisse der Messer erlauben.

Für das Messer wird bevorzugt Bandstahl verwendet, der mit üblichen Methoden leicht in die gewünschte Form gebracht werden kann. Vorteilhafterweise verwendet man einen Bandstahl, der bereits vor dem Biegen über die Schneidkante(n) und die Nut verfügt.

Es ist besonders günstig bei der Herstellung und für die mechanischen Eigenschaften des Messers, wenn der Boden der Nut mit der Schneidkante in Stanzrichtung fluchtet. Dies bedeutet bei zweischneidigen Stanzmessern, daß der Nutenboden auf der Verbindungslinie der beiden Schneiden liegt.

Als Verstärkungsplatten werden bevorzugt Kunststoffplatten verwendet, beispielsweise aus Polyolefin, Polyethylen oder Acryl. Solche Platten weisen eine Shore-Härte D von 75 auf, was bei Verwendung eines 19 mm hohen und 2,3 mm starken Stanzmessers, einer Plattenstärke von 4 mm und einer Plattengröße von etwa 100 x 50 mm eine Einpreßkraft von 45 kN erforderlich macht. Die Einpreßkraft hängt in erster Linie von der Länge, aber auch von der Fläche und Form des Messers ab.

Unter den Bezeichnungen "Einstanzen", "Stanzen", "Pressen" und "Einpressen" im Zusammenhang mit der Herstellung des erfindungsgemäßen Messers werden hier sowohl schlagartig als auch stetig arbeitende Verfahren verstanden. Solche Verfahren werden in der DIN 8588 (Zerteilen) als Untergruppe 3.1.2. - Keilschneiden - behandelt. Es ist in speziellen Fällen auch möglich, nach Untergruppe 3.1.1. - Scherschneiden - zu arbeiten, insbesondere, wenn der Nutenboden nicht an der oben angegebenen Stelle des Messers liegt.

Die Anwendung der Erfindung auf ein spezifisches Problem ist dem Fachmann in Kenntnis derselben leicht möglich.

Die Erfindung wird an Hand der Zeichnung näher erläutert. Dabei zeigt die Fig. 1 ein erfindungsgemäßes Stanzmesser vor dem Einstanzen der Verstärkungsplatte, Fig. 2 ein Stanzmesser nach dem Einstanzen der Verstärkungsplatte und Fig. 3 ein fertiges Stanzmesser mit Einbauten, teilweise im Schnitt.

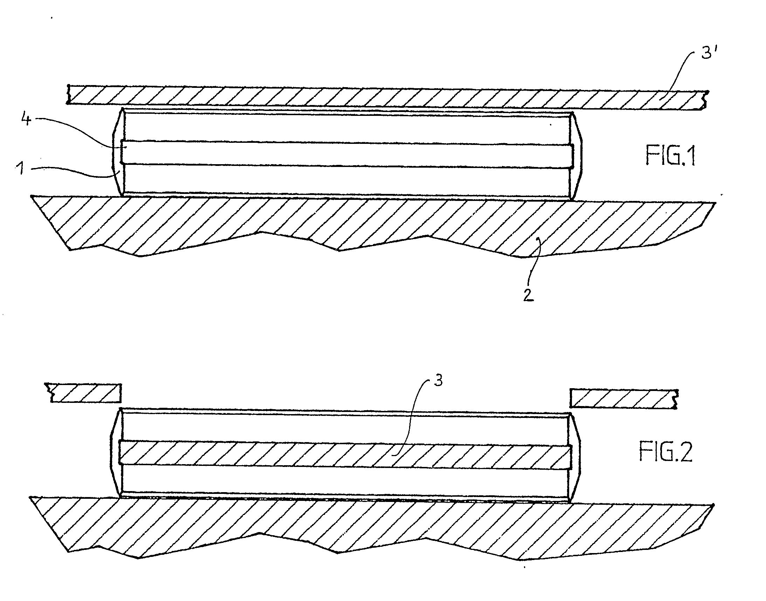

Auf einem fertig gebogenen Stanzmesser 1, welches auf einer festen Unterlage 2 ruht, liegt eine Platte 3', aus der die Verstärkungsplatte 3 gestanzt werden soll, über dem Messer 1. Diese Platte wird durch in der Stanzindustrie übliche Vorrichtungen gegen das Messer 1 gedrückt und gelangt schließlich in die in Fig. 2 dargestellte Lage.

Die Verstärkungsplatte 3 sitzt mit ihren ausgestanzten Rändern in der Nut 4 und wird von ihr gehalten. Das Stanzmesser ist somit in einem Arbeitsgang fertiggestellt, kann jedoch durch Verbinden des Messers mit der Verstärkungsplatte weiter versteift werden. Es ist notwendig, die Messerenden schon vor dem Stanzen der Verstärkungsplatte miteinander zu verbinden, bevorzugt zu verschweißen.

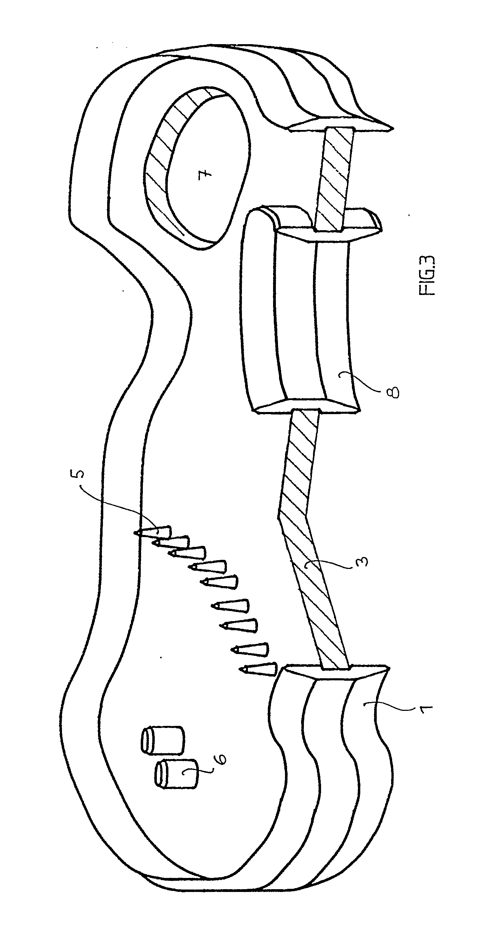

In Fig. 3 ist ein erfindungsgemäßes Stanzmesser mit einigen Einbauten, z.T. im Schnitt, dargestellt. Bei den Einbauten handelt es sich um zwei Lochpfeifen 6 und um eine Reihe von Markierdorne 5, die eine Nahtvorzeichenlinie bilden. Ein Innenmesser 8 ist im Schnitt dargestellt, wodurch seine Nut im Bereich der Verstärkungsplatte 3 sichtbar wird. Beim dargestellten Stanzmesser ist weiters in der Verstärkungsplatte 3 eine Öffnung 7 vorgesehen, durch die das Gewicht des Stanzmessers verringert und seine Handhabung erleichtert wird. Diese Öffnung erleichtert auch die Entnahme des ausgestanzten Gutes aus dem Messer.

Das erfindungsgemäße Verfahren kann verschiedentlich abgewandelt werden. So ist es nicht notwendig, daß die Platte von oben eingepreßt wird, und es kann die Verstärkungsplatte auch vor dem Einstanzen mit den Einbauten versehen worden sein, wenn dies gewünscht wird. Es ist besonders bei Verwendung stärkerer Verstärkungsplatten möglich, gegen das Messers mit einer Druckvorrichtung zu pressen, die ebenfalls mit einer Schneide (gegenüber der Messerschneide oder auch versetzt zur Messerschneide) versehen ist, um den Zerteilvorgang zu erleichtern.

Die Erfindung betrifft auch Stanzmesser, die nach dem erfindungsgemäßen Verfahren hergestellt worden sind.

## Patentansprüche

1. Verfahren zur Herstellung eines ein- oder zweiseitigen Stanzmessers für nichtmetallische Werkstoffe, wie Leder, Textilien, Papier etc. mit einer innenliegenden Nut und einer in die Nut eingreifenden Verstärkungsplatte, die aus nichtmetallischem Werkstoff, vorzugsweise Kunststoff, besteht und deren Dicke zumindest angenähert der Breite der Nut entspricht, dadurch gekennzeichnet, daß die Verstärkungsplatte (3) von dem Messer (1), das sie verstärken soll, ausgestanzt wird.

2. Verfahren zur Herstellung eines Stanzmessers nach Anspruch 1, dadurch gekennzeichnet, daß das fertig gebogene und an seinen Enden geschlossene Messer (1) zwischen einer Druckplatte (2) und einer Platte (3') aus dem Material, aus dem die Verstärkungsplatte (3) hergestellt werden soll, angeordnet und mit in der Stanztechnik üblichen Vorrichtungen in das Messer eingestanzt wird, wobei die Verstärkungsplatte in die Nut (4) zu liegen kommt.

3. Verfahren nach Anspruch 1 oder 2, dadurch gekennzeichnet, das Messer mit der Verstärkungsplatte (3), beispielsweise durch Schrauben, Löten oder Schweißen, nach dem Einsetzen der Verstärkungsplatte, verbunden wird, und daß gegebenenfalls in die Verstärkungsplatte, vorteilhafterweise nach deren Einbringen in das Messer, übliche Einbauten, wie Lochpfeifen (6), Innenmesser (8), Nahtvorzeichenlinien und Markierdorne (5), gegebenenfalls nach Vorbohren, eingestanzt werden.

4. Stanzmesser, dadurch gekennzeichnet, daß es nach einem Verfahren nach einem der Ansprüche 1 bis 3 hergestellt worden ist.

FIG.1

FIG.2

EP 0 321 437 A2

FIG.3